(19) Europäisches Patentamt
European Patent Office
Office européen des brevets

(11) **EP 4 775 298 A1**

(12) **EUROPEAN PATENT APPLICATION**
published in accordance with Art. 153(4) EPC

(43) Date of publication:
**15.07.2026 Bulletin 2026/29**

(21) Application number: **24862415.7**

(22) Date of filing: **20.06.2024**

(51) International Patent Classification (IPC):
**B01D 65/00** (2006.01)   **B01D 53/22** (2006.01)
**G05B 23/02** (2006.01)

(52) Cooperative Patent Classification (CPC):
**B01D 53/22; B01D 65/00; G05B 23/02**

(86) International application number:
**PCT/JP2024/022410**

(87) International publication number:
**WO 2025/052758 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.09.2023 JP 2023144135**

(71) Applicant: **Hitachi, Ltd.
Tokyo 100-8280 (JP)**

(72) Inventors:
• **KIM Eunkyeong
Tokyo 100-8280 (JP)**

• **YASHIKI Tatsurou
Tokyo 100-8280 (JP)**
• **ISHIDA Naoyuki
Tokyo 100-8280 (JP)**
• **WATANABE Ayumi
Tokyo 100-8280 (JP)**
• **KAWAHARA Yohei
Tokyo 100-8280 (JP)**
• **IIZUKA Hidehiro
Tokyo 100-8280 (JP)**
• **INAGAKI Ryohei
Tokyo 100-8280 (JP)**

(74) Representative: **Mewburn Ellis LLP
Aurora Building
Counterslip
Bristol BS1 6BX (GB)**

(54) **DETERIORATION CHECKING DEVICE FOR GAS SEPARATION SYSTEM**

(57)     a deterioration checking device for a gas separation system is provided that is capable of checking for deterioration by using an existing sensor required for system operation. The deterioration checking device for the gas separation system includes one or more gas separation membranes for selectively permeating a specific gas, and controls an output of each of the gas separation membranes by using an output control valve, and the deterioration checking device includes: an input unit that captures a processing amount that is affected by deterioration of the gas separation membrane; a database that stores the processing amount when the gas separation system is operated using the gas separation membrane in a brand-new state (before the deterioration); and a separation-membrane performance evaluation unit that evaluates performance of the gas separation membrane on the basis of a difference between a processing amount at the current time of the capturing and a processing amount in the brand-new state.

FIG. 1

## Description

## Technical Field

The present invention relates to a deterioration checking device for a gas separation system.

## Background Art

As a method for separating a specific gas from a plurality of mixed gases, there is a method that uses a separation membrane for selectively permeating the gas. Examples of the separation membrane include a molecular sieve membrane that carries out separation on the basis of a molecular size difference, which is represented by a ceramic membrane, a polymer membrane utilizing a difference in gas solubility in the membrane, and the like. Such separation membranes allow permeation of certain amounts of gases other than a specific gas intended to be permeated. A side before permeation through a separation membrane is referred to as a primary side, while a side after the permeation is referred to as a secondary side.

A gas permeation amount of a separation membrane is proportional to a value obtained by multiplying a difference between a primary-side gas partial pressure and a secondary-side gas partial pressure by a membrane area. In addition, the gas permeation amount of the separation membrane is reduced by deterioration of the separation membrane. In a gas separation system, in order to hold a separation efficiency, a deteriorated state of a separation membrane is checked and maintenance such as replacement of the separation membrane is performed when the separation membrane deteriorated.

As an example of a deterioration checking method for a separation membrane, a method in PTL 1 can be listed. PTL 1 discloses the method of measuring a flow rate in a remaining gas discharge path and a flow rate in a permeate gas discharge path in a separation membrane, and evaluating a deteriorated status of the separation membrane by using a flow rate ratio therebetween. In order to provide a membrane separation system and a deterioration evaluation method for the separation membrane that allow the deteriorated status of the separation membrane to be evaluated at low cost, "the membrane separation system includes a membrane separation device having a separation membrane, a multi-component gas supply path that supplies a multi-component gas to the membrane separation device, a remaining gas discharge path from which a remaining gas having flown out without permeating through the separation membrane flows out, a permeate gas discharge path from which a permeate gas having permeated through the separation membrane and flown out flows out, a remaining gas flow meter that measures a flow rate F1 in the remaining gas discharge path, a permeate gas flow meter that measures a flow rate F2 in the permeate gas discharge path, and an arithmetic control device, and the arithmetic control device determines a ratio Rm between the flow rate F1 and the flow rate F2, and compares the determined ratio Rm to a pre-set ratio Rk between the flow rate F1 and the flow rate F2 to thereby evaluate a deteriorated status of the separation membrane".

## Citation List

## Patent Literature

PTL 1: Japanese Unexamined Patent Application Publication No. 2022-127393

## Summary of Invention

## Technical Problem

The present invention relates to a deterioration checking device for a system that controls a concentration of a specific gas to a specific gas concentration required by a specific gas user at a location of use and for a system that controls the specific gas concentration in a gas production facility, a chemical plant, or the like, when a mixture of an existing natural gas containing methane as a main component and the specific gas different from the natural gas is to be transported by using a gas grid for the natural gas.

In this case, when the concentration of the specific gas cannot be normally controlled due to deterioration of the systems or the like, and the gas at a gas concentration outside an allowable range is supplied to a device, the device may fail. In a facility such as a production facility or a chemical plant, this may lead to a serious accident, and it is necessary to regularly check deterioration of a gas separation system.

For this reason, it is necessary to check the deterioration of the gas separation system with high accuracy but, numerous measurements of a concentration, a flow rate, and the like are required in the deterioration checking of the separation membrane, and accordingly a large number of sensors such as a gas concentration meter and a flow meter are required to result in higher cost.

An object of the present invention is to provide a deterioration checking device for a gas separation system that is capable of checking for deterioration by using an existing sensor required for a system operation without additionally providing a sensor for checking for deterioration of a separation membrane.

## Solution to Problem

In order to solve the above problems, the present invention provides "a deterioration checking device for a gas separation system that includes one or more gas separation membranes for selectively permeating a specific gas, and controls an output of each of the gas separation membranes by using an output control valve, the deterioration checking device including: an input unit that captures a processing amount that is affected by deterioration of the gas separation membrane; a database that stores the processing amount when the gas separation system is operated using the gas separation membrane in a brand-new state (before the deterioration); and a separation-membrane performance evaluation unit that evaluates performance of the gas separation membrane on the basis of a difference between a processing amount at the current time of the capturing and a processing amount in the brand-new state."

## Advantageous Effects of Invention

According to the present invention, it is possible to reduce an installation of a sensor for checking for deterioration of a separation membrane.

## Brief Description of Drawings

Fig. 1 is a diagram illustrating a schematic configuration example showing a gas separation system according to a first embodiment of the present invention.
Fig. 2 is a diagram illustrating a signal flow in a control device in the gas separation system according to the first embodiment of the present invention.
Fig. 3 is a diagram illustrating a processing flow in a separation-membrane performance evaluation unit of the control device in the gas separation system according to the first embodiment of the present invention.
Fig. 4 is a diagram illustrating a schematic configuration example showing a gas separation system according to a second embodiment of the present invention.
Fig. 5 is a diagram illustrating a schematic configuration example showing a gas separation system according to a third embodiment of the present invention.
Fig. 6 is a diagram illustrating a signal flow in the control device in the gas separation system according to the third embodiment of the present invention.
Fig. 7 is a diagram illustrating an example of an operation schedule for the gas separation system according to the third embodiment of the present invention.
Fig. 8 is a diagram illustrating an example of a time variation of a hydrogen concentration in a supply gas to the gas separation system according to the third embodiment of the present invention.
Fig. 9 is a diagram illustrating a schematic configuration example showing a gas separation system according to a fourth embodiment of the present invention.
Fig. 10 is a diagram illustrating a signal flow in the control device in the gas separation system according to the fourth embodiment of the present invention.
Fig. 11 is a diagram illustrating an example of a screen display in a computer of the gas separation system according to the fourth embodiment of the present invention.
Fig. 12 is a diagram illustrating an example of the screen display in the computer of the gas separation system according to the fourth embodiment of the present invention.
Fig. 13 is a diagram illustrating a schematic configuration example showing the gas separation system according to a fifth embodiment of the present invention.
Fig. 14 is a diagram illustrating characteristics of a mixed-gas hydrogen concentration and an extracted-gas hydrogen concentration.
Fig. 15 is a diagram illustrating a schematic configuration example showing a gas separation system according to a sixth embodiment of the present invention.
Fig. 16 is a diagram illustrating characteristics of difference between a primary pressure and a secondary pressure, and a mixed gas flow rate.

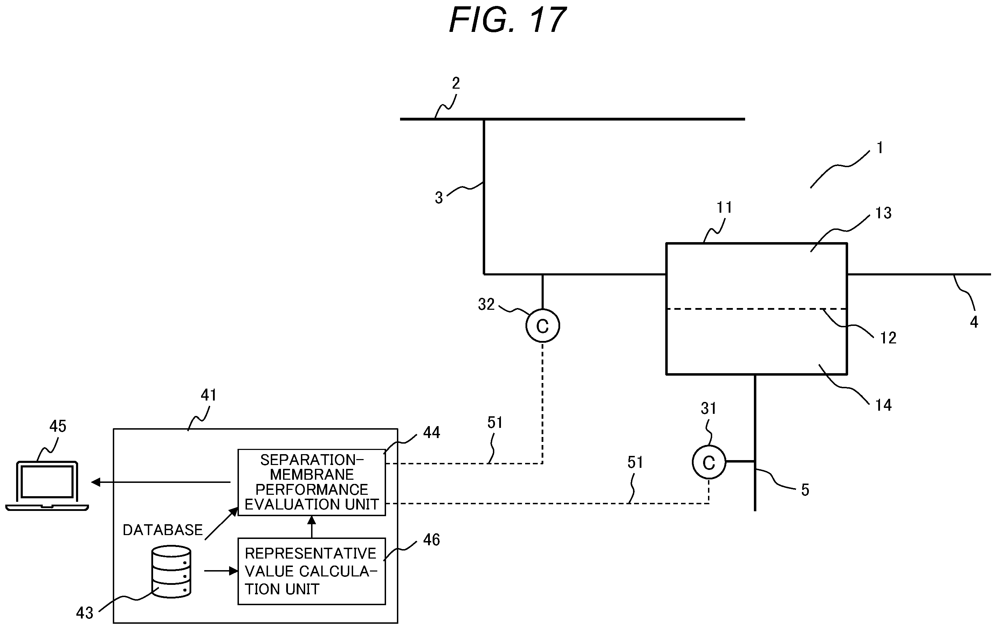

Fig. 17 is a diagram illustrating a schematic configuration example showing a gas separation system according to a seventh embodiment of the present invention.

## Description of Embodiments

Hereinafter, embodiments of the present invention will be described based on the drawings.

In the present invention, it is intended to provide a deterioration checking device for a gas separation system that is capable of checking for deterioration by using an existing sensor required for system operation. In this case, a processing amount detected by the existing sensor is affected by deterioration of separation membrane performance, and the sensor allows the deterioration to be estimated on the basis of a change from an initial processing amount before the start of the operation to a processing amount at the present time.

The embodiments of the present invention provide several examples of the processing amount that is affected by the deterioration, and the change of the processing amount before the start of the operation to that at the present time allows the deterioration to be estimated. A description will be given herein of cases where attention is focused on a valve operation amount in the first to fourth embodiments, attention is focused on a hydrogen concentration in a mixed gas in the fifth and seventh embodiments, and attention is focused on a flow rate and a pressure of the mixed gas in the sixth embodiment.

## First Embodiment

A description will be given of the case where deterioration is checked by focusing attention on the valve operation amount in the first to fourth embodiments.

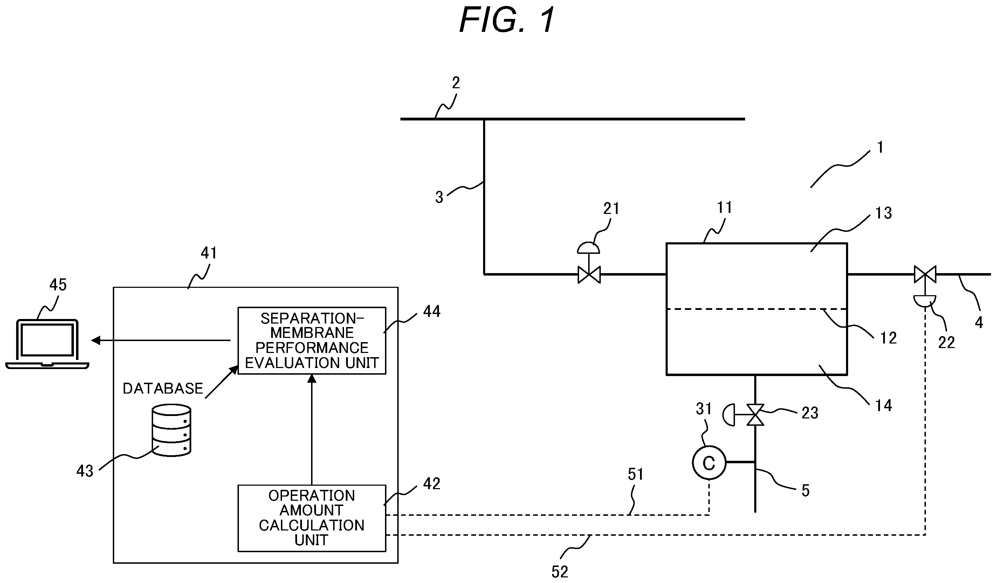

Fig. 1 is a diagram illustrating a schematic configuration example showing a gas separation system according to the first embodiment of the present invention.

In the present embodiment, a description will be given of a case where control is performed on a supply gas obtained by mixing hydrogen with methane such that, even when a hydrogen concentration in the supply gas fluctuates around a given value, a hydrogen concentration in an extracted gas has a predetermined value. For example, there are cases where the hydrogen concentration is controlled to be constant at 20% (vol%), where the hydrogen concentration is controlled to be equal to or more than a predetermined value or equal to or less than the predetermined value, and where the hydrogen concentration is controlled to fall within a predetermined range.

In Fig. 1, a gas separation system 1 is configured to receive a supply of a mixed gas including hydrogen and methane through a mixed gas pipe 3 branched from a mixed gas main pipe 2. The gas separation system 1 has a gas separation membrane module 11. The separation membrane module 11 is divided by a separation membrane 12 into a primary side 13 and a secondary side 14.

The mixed gas pipe 3 is connected to the primary side 13. To the primary side 13, a non-permeate gas pipe 4 is connected. To the secondary side 14, a permeate gas pipe 5 is connected. Of the mixed gas supplied from the mixed gas main pipe 2 to the primary side 13 of the hydrogen separation device 1, hydrogen mainly permeates through the separation membrane 12. Methane also permeates through the separation membrane 12, but hydrogen is more permeable than methane. Accordingly, the hydrogen concentration is higher on the secondary side 14 than on the primary side 13. A permeation amount of each of the gases is proportional to a partial pressure difference between the individual gases on the primary side 13 and on the secondary side 14.

The mixed gas pipe 3 is provided with a mixed-gas flow control valve 21. The mixed-gas flow control valve 21 controls a flow rate of the mixed gas supplied to the separation membrane. A description of display on a flow meter and a control method therefor is omitted.

The non-permeate gas pipe 4 is provided with a non-permeate-gas pressure control valve 22. The non-permeate-gas pressure control valve 22 controls the pressure on the primary side of the separation membrane on the basis of the hydrogen concentration in the permeate gas. Details thereof will be described later. The permeate gas pipe 5 is provided with a permeate-gas pressure control valve 23. The permeate-gas pressure control valve 23 controls the pressure on the secondary side. A description of display on a pressure meter and a control method therefor is omitted.

In addition, the permeate gas pipe 5 is provided with an extracted-gas hydrogen concentration meter 31. The extracted-gas hydrogen concentration meter 31 measures the hydrogen concentration in the permeate gas, and transmits a hydrogen concentration signal to a control device 41 via a hydrogen concentration signal cable 51.

The control device 41 has two main functions. One of the functions is to control the gas separation system, and another of the functions is to monitor the gas separation system. An operation amount calculation unit 42 functions for the control, while a separation-membrane performance evaluation unit functions for the monitoring. Of the above units, the operation amount calculation unit 42 receives the hydrogen concentration signal, calculates the valve opening of the non-permeate-gas pressure control valve 22 on the basis of the hydrogen concentration signal such that the hydrogen concentration in the permeate gas (extracted gas) has a predetermined value in the operation amount calculation unit 42, and transmits the valve opening to the non-permeate-gas pressure control valve 22 through a control signal cable 52. Note that the operation amount calculation unit 42 may also calculate a valve opening operation amount for the non-permeate-gas pressure control valve 22 through control of setting a pressure or a flow rate to a predetermined value, instead of using the hydrogen concentration signal.

A further description will be given of the operation amount calculation unit 42. When, e.g., the concentration in the permeate gas is lower than the predetermined value, the operation amount calculation unit 42 calculates the valve opening of the non-permeate-gas pressure control valve 22 to a small value on the basis of a characteristic of the hydrogen permeation amount of the separation membrane that is proportional to a gas partial pressure difference between the primary side 13 and the secondary side 14. When the valve opening of the non-permeate-gas pressure control valve 22 is reduced, the pressure on the primary side 13 increases, the gas partial pressure difference increases, and the hydrogen permeation amount of the separation membrane increases to allow the hydrogen concentration in the permeate gas to be increased. A method for calculating the valve opening on the basis of the hydrogen concentration needs only to be a conventional method for proportional control, proportional-integral control, or the like.

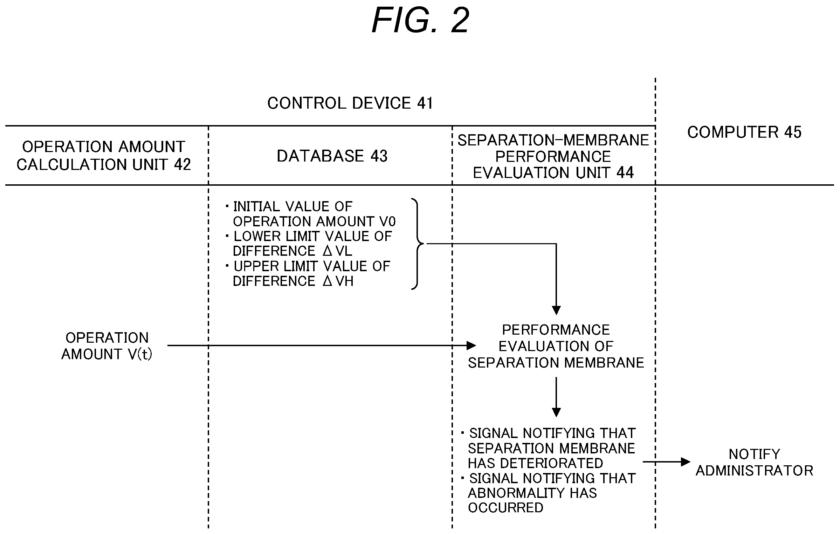

The control device 41 includes a database 43 and a separation-membrane performance evaluation unit 44 in addition to the operation amount calculation unit 42, and is connected to an external computer (user-interface-mounted device). Fig. 2 illustrates a control signal flow between each of the operation amount calculation unit 42, the database 43, and the separation-membrane performance evaluation unit 44 each included in the control device 41 and the external computer (user-interface-mounted device).

In the database 43, the following data is stored in advance. In addition, a lower limit value $\Delta VL$ and an upper limit value $\Delta VH$ of a difference between a current operation amount $V(t)$ and an initial value of the operation amount can be analyzed or set by experiment on the basis of constraints such as the separation efficiency required of the gas separation system and the specifications of constituent devices thereof.

·An operation amount (valve opening) $V0$ when the gas separation system was operated by using the separation membrane 12 in a brand-new state (before deterioration) (hereinafter referred to as "an initial value of an operation amount")

·A lower limit value $\Delta VL$ of a difference between the current operation amount $V(t)$ and the initial value of the operation amount

·An upper limit value $\Delta VH$ of the difference between the current operation amount $V(t)$ and the initial value of the operation amount

The separation-membrane performance evaluation unit 44 receives the following data.

·The current operation amount $V(t)$ calculated by the operation amount calculation unit 42

·The lower limit value $\Delta VL$ and the upper limit value $\Delta VH$ of the difference between the initial value $V0$ of the operation amount and the initial value of the operation amount that are stored in advance in the database 43

The separation-membrane performance evaluation unit 44 evaluates the performance of the separation membrane on the basis of the received data, and transmits a result of evaluating the performance of the separation membrane to a computer 45. Note that examples of the result of evaluating the performance of the separation membrane include a signal reporting the deterioration of the separation membrane and a signal reporting the occurrence of an abnormality.

Next, an example of a separation-membrane performance evaluation method for the separation-membrane performance evaluation unit 44 and a result thereof will be described.

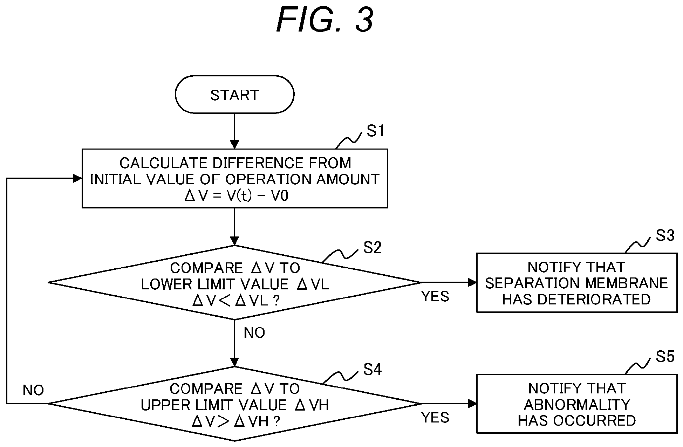

Fig. 3 illustrates a processing flow in the separation-membrane performance evaluation unit 44. First, the separation-membrane performance evaluation unit 44 calculates a difference $\Delta V$ between the current operation amount $V(t)$ and the initial value $V0$ of the operation amount (Processing Step S1). The separation-membrane performance evaluation unit 44 compares the difference $\Delta V$ to the lower limit value $\Delta VL$ (Processing Step S2), determines that the separation membrane 12 has deteriorated when $\Delta V <$ LOWER LIMIT VALUE $\Delta VL$ is satisfied, and transmits a result thereof to the computer 45 (Processing Step S3).

Meanwhile, when $\Delta V <$ LOWER LIMIT VALUE $\Delta VL$ is not satisfied, the separation-membrane performance evaluation unit 44 proceeds to subsequent processing, and compares the difference $\Delta V$ to the upper limit value $\Delta VH$ (Processing Step S4). When $\Delta V >$ UPPER LIMIT VALUE $\Delta VH$ is satisfied, the separation-membrane performance evaluation unit 44 determines that an abnormality has occurred, and transmits a result thereof to the computer 45 (Processing Step S5). Meanwhile, when $\Delta V >$ UPPER LIMIT VALUE $\Delta VH$ is not satisfied, the separation-membrane performance evaluation unit 44 returns to the processing in Processing Step S1.

In the gas separation system 1, when the separation membrane 12 has deteriorated, a hydrogen permeation amount of the separation membrane deceases to reduce the hydrogen concentration on the secondary side 14. To increase the hydrogen concentration on the secondary side 14 (set the hydrogen concentration on the secondary side 14 to a predetermined value), the operation amount calculation unit 42 calculates the valve opening V(t) of the non-permeate-gas pressure control valve 22 to a smaller value (V(t) < V0) such that the pressure on the primary side 13 increases (the gas partial pressure difference increases). As a result, the valve opening of the non-permeate-gas pressure control valve 22 is calculated to a small value with the deterioration of the separation membrane 12.

According to the present invention, it is possible to detect the performance deterioration of the separation membrane 12 on the basis of such a change in the current operation amount V(t), determine that the deterioration of the separation membrane has proceeded when V(t) - V0 < LOWER LIMIT VALUE $\Delta$VL is satisfied, and make a notification. Meanwhile, when V(t) - V0 > LOWER LIMIT VALUE $\Delta$VH is satisfied, it can be considered that any abnormality, such as a failure of a hydrogen concentration meter, has occurred in the gas separation system, and therefore it is possible to notify that an abnormality has occurred in the gas separation system.

Thus, it is possible to detect a change in the hydrogen permeation amount of the separation membrane, i.e., a change in the performance of the separation membrane on the basis of a change in the operation amount calculated by the control device, and check the deteriorated state of the separation membrane without additionally providing a sensor. This can reduce cost for the gas separation system.

In addition,, in the present embodiment, the hydrogen concentration in the permeate gas is controlled by controlling the pressure on the primary side 13 by using the non-permeate-gas pressure control valve 22, but the hydrogen concentration in the permeate gas may also be controlled by controlling the pressure on the secondary side 14 by using the permeate-gas pressure control valve 23.

Further, when the hydrogen concentration of a supply gas to the separation membrane 12 fluctuates, it may also be possible to correct the initial value V0 of the operation amount and the lower limit value $\Delta$VL and the upper limit value $\Delta$VH of the difference from the initial value of the operation amount by using a relational formula between the hydrogen concentration in the supply gas and the operation amount or the like.

Moreover, the present embodiment uses the operation amount calculated through control of setting the concentration in the extracted gas to the predetermined value, but may also use the operation amount calculated through control of setting the pressure or the flow rate to the predetermined value. In addition, the deterioration checking device for the gas separation system may be configured appropriately by using a calculator.

According to the present invention, it is possible to reduce installation of a sensor for checking for deterioration of a separation membrane.

**Second Embodiment**

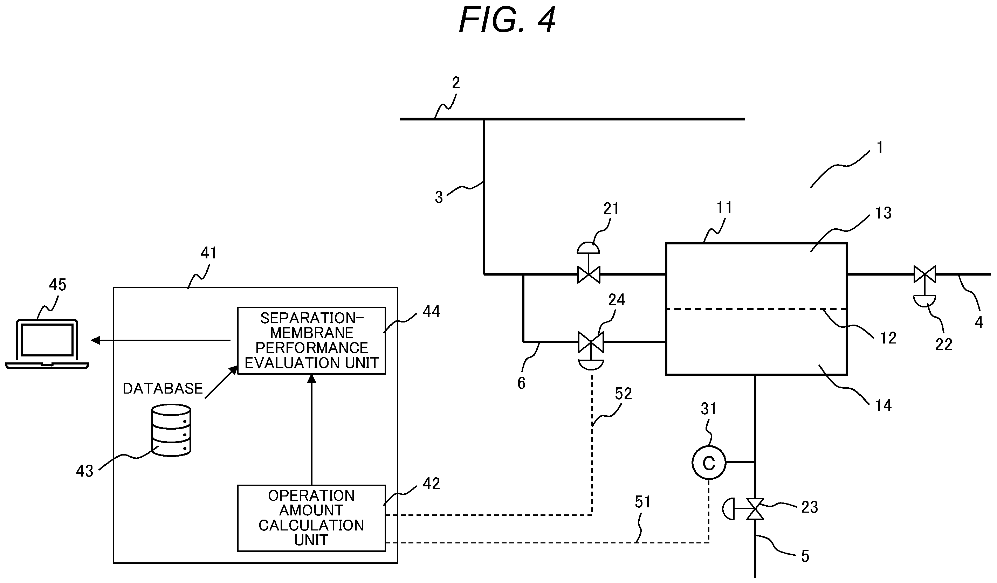

Fig. 4 is a diagram illustrating a schematic configuration example showing the gas separation system according to the second embodiment of the present invention.

A difference from FIG. 1 is that a gas branching pipe 6 that branches the gas from the supply gas pipe 3 onto the secondary side 14 of the separation membrane 12 is provided, and a branched-gas flow control valve 24 is provided in the gas branching pipe 6. Another difference is that the operation amount calculation unit 42 transmits the valve opening of the branched-gas flow control valve 24.

The branched-gas flow control valve 24 controls a flow rate of a branched gas branched from the supply gas pipe 3 onto the secondary side 14 of the separation membrane 12. On the secondary side 14, the permeate gas (at a high hydrogen concentration) through the separation membrane is diluted to a branched gas (at a low hydrogen concentration). In other words, by controlling a flow rate of the branched gas by using the branched-gas flow control valve 24, the concentration on the secondary side 14 is controlled.

The non-permeate-gas pressure control valve 22 controls the pressure on the primary side 13 of the separation membrane 12. A description of display on a pressure meter and a control method therefor is omitted.

The operation amount calculation unit 42 calculates the valve opening of the branched-gas flow control valve 24 on the basis of a hydrogen concentration signal for the permeate gas received from the hydrogen concentration signal cable 51 such that the hydrogen concentration in the permeated gas has a predetermined value, and transmits the valve opening to the branched-gas flow control valve 24 through the control signal cable 52. For example, when the concentration in the extracted gas is lower than the predetermined value, the operation amount calculation unit 42 calculates the valve opening of the branched-gas flow control valve 24 to a small value. When the valve opening of the branched-gas flow control valve 24 is reduced, the flow rate of the branched gas decreases to be able to increase the concentration in the extracted gas. A method for calculating the valve opening on the basis of the hydrogen concentration needs only to be a conventional method for proportional control, proportional-integral control, or the like.

In addition, the non-permeate-gas pressure control valve 22 is regarded as a control target in the first embodiment, while the branched-gas flow control valve 24 is regarded as the control target in the second embodiment, and the operation amounts thereof are each regarded as a target of deterioration monitoring. However, these valves determine the output of the gas separation system and it can be said that these valves are output control valves in this sense of meaning.

In the second embodiment, it is possible to maintain constant the gas partial pressure difference between the primary side and the secondary side, which is proportional to the hydrogen permeation amount of the separation membrane, and a performance change of the separation membrane more remarkably appears as the hydrogen permeation amount. Accordingly, the performance change of the separation membrane easily appears more remarkably in the operation amount calculated by the control device, and it is possible to check the deteriorated state of the separation membrane with high accuracy.

In addition,, in the present embodiment, the gas is branched from the supply gas pipe 3 onto the secondary side 14 of the separation membrane 12, but it may also be possible to branch the gas from the non-permeate gas pipe 4 onto the secondary side 14 of the separation membrane 12.

## Third Embodiment

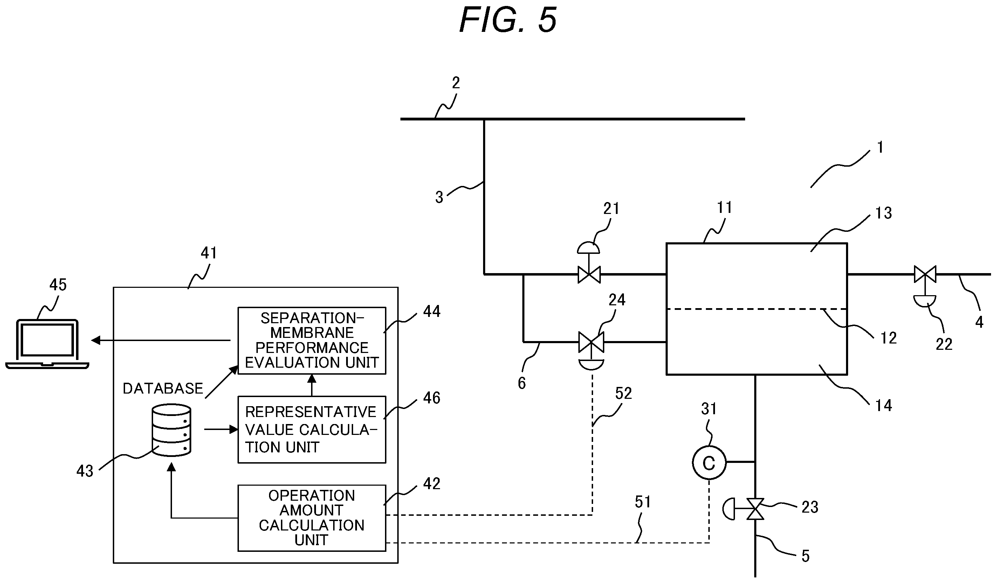

Fig. 5 is a diagram illustrating a schematic configuration example showing the gas separation system according to the third embodiment. A difference from Fig. 4 is that the control device 41 includes a representative value calculation unit 46.

In the third embodiment, the operation amount calculated by the operation amount calculation unit 42 is stored in the database 43, the representative value calculation unit 46 calculates a representative value from the stored operation amounts, and the separation-membrane performance evaluation unit 44 evaluates the deteriorated state of the separation membrane by using the representative value.

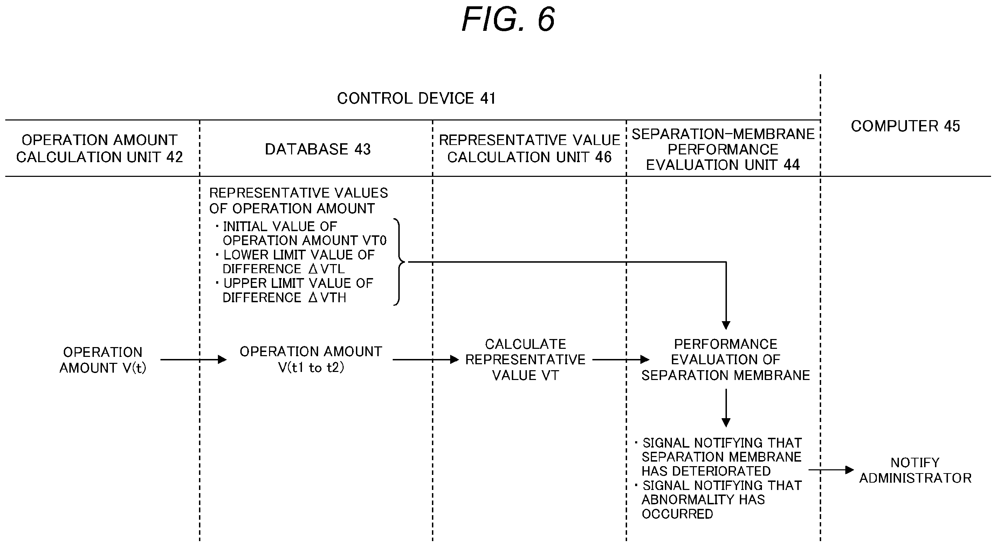

Fig. 6 illustrates a control signal flow in the control device 41. The database 43 has, with respect to the representative value of the operation amount, the initial value VT0, and the lower limit value ΔVTL and the upper limit value ΔVTH of the difference. The database 43 also stores the operation amount V(t) (V(t1 to t2)) calculated by the operation amount calculation unit 42 during a period from the time t1 to the time t2. When the operation schedule for the gas separation system 1 and the hydrogen concentration in the mixed gas main pipe 2 vary with time, the time t1 and the time t2 are set in advance on the basis of the variation periods thereof or the like.

The representative value calculation unit 46 calculates the representative value of the operation amount by using the operation amount V (t1 to t2) during the period from the time t1 to the time t2. The following will describe two examples for a method for calculating the representative value of the operation amount.

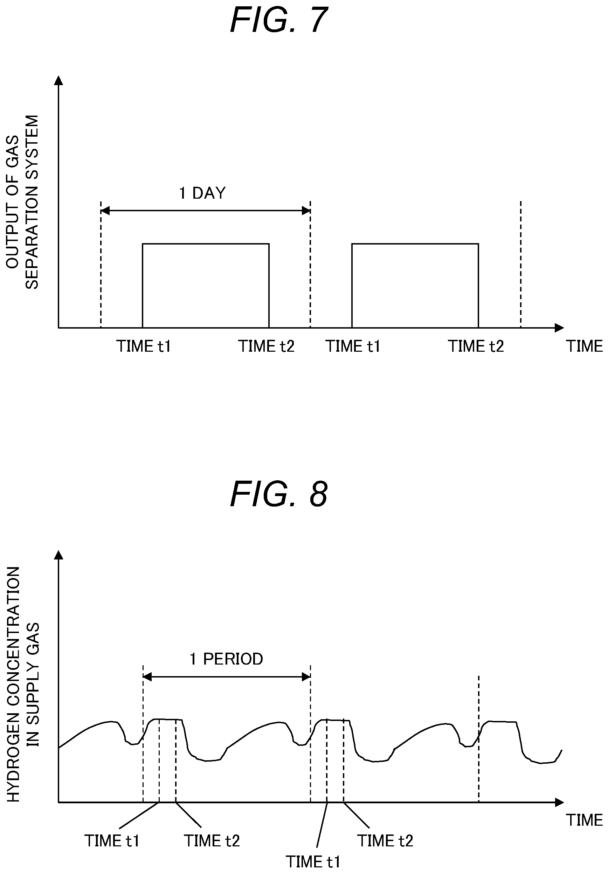

As the first example, Fig. 7 illustrates an example of the operation schedule for the gas separation system 1. For example, when the gas separation system 1 is regularly operated for a given period of time per day, the time t1 is set to an operation start time, while the time t2 is set to an operation end time. The representative value calculation unit 46 determines a time average of the operation amount V(t1 to t2) during the period from the time t1 to the time t2, and calculates the time average as the representative value of the operation amount. By using such a representative value of the operation amount, it is possible to reduce processing in the separation-membrane performance evaluation unit 44.

As the second example, Fig. 8 illustrates an example of a time variation of the hydrogen concentration in the supply gas to the gas separation system 1.

For example, when the hydrogen concentration in the supply gas (mixed gas main pipe 2) periodically varies with time, on the basis of the period thereof, the period from the time t1 to the time t2 is set. For example, when the period of the hydrogen variation is one week, a period from 9:00 AM to 10:00 AM on Monday is set as the period from the time t1 to the time t2. Points to consider in setting the period include the fact that the hydrogen concentration is equal at each period and that the variation of the hydrogen concentration is relatively small. The representative value calculation unit 46 determines a time average of the operation amount V(t1 to t2) during the period from the time t1 to the time t2. By using such a representative value of the operation amount, even when the hydrogen concentration in the supply gas varies, the operation amounts can be compared under the condition of the equal hydrogen concentration (equal gas partial pressure), and therefore the deteriorated state of the separation membrane can be checked more accurately.

## Fourth Embodiment

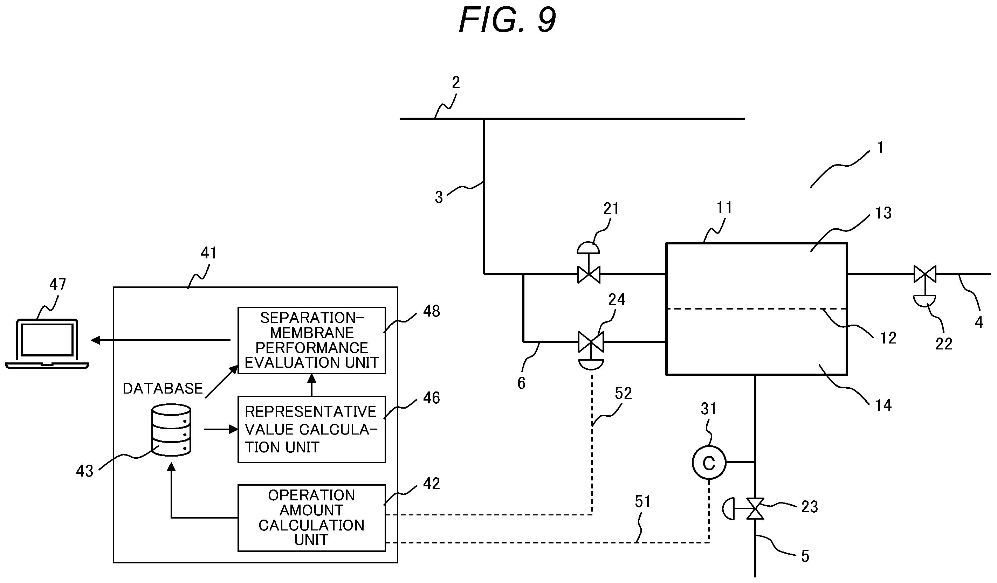

Fig. 9 is a diagram illustrating a schematic configuration example showing the gas separation system according to the fourth embodiment of the present invention.

A difference from Fig. 5 is that a separation-membrane performance evaluation unit 48 calculates a deterioration index value D(t) indicating the deteriorated state of the separation membrane 12, and a computer 47 displays the deterioration index value D(t) on the screen.

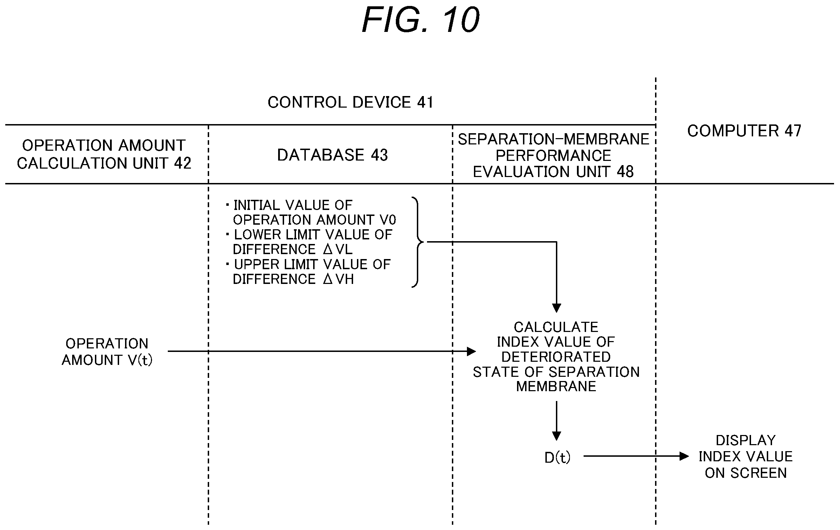

Fig. 10 illustrates a flow of the control signal in the control device 41. A difference from the flow of the control signal in the control device 41 of the gas separation device system according to the first embodiment shown in Fig. 2 is that the separation-membrane performance evaluation unit 48 calculates the deterioration index value D(t) indicating the deteriorated state of the separation membrane 12. The following will describe an example of a method for calculating the deterioration index value D(t). As shown in Expression (1), calculation is performed such that the deterioration index value D (t) is 0 in an initial state, and is 1 in a state where the separation membrane has deteriorated.

[Math. 1]

$$D(t) = (V(t) - V0)/\Delta VL \qquad (1)$$

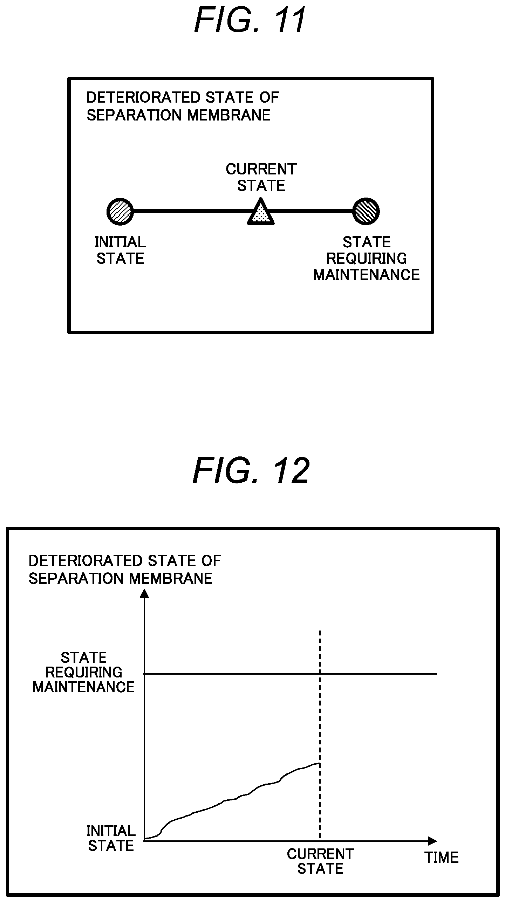

The computer 47 receives the deterioration index value D(t) of the separation membrane, and displays the deterioration index value D(t) on the screen. Fig. 11 and Fig. 12 illustrate examples of the screen displayed on the computer 47. Fig. 11 illustrates a degree of the current deteriorated state of the separation membrane. A mark for an "INITIAL STATE" and a mark for a "STATE REQUIRING MAINTENANCE" are connected in a straight line and, on the line, the current deteriorated state is displayed with a triangular mark ($\Delta$). When D(t) is 0, the triangular mark is located on the "INITIAL STATE" mark in the screen and, when D(t) is 1, the triangular mark is located on the "STATE REQUIRING MAINTENANCE" mark in the screen.

Fig. 12 illustrates a time variation of the deteriorated state of the separation membrane. An ordinate axis represents the deteriorated state of the separation membrane, while an abscissa axis represents time. In this case, the computer 45 stores the received deteriorated state D(t) of the separation membrane, and graphically plots the deteriorated state D(t). From a time variation graph of the deteriorated state of the separation membrane, a time when the separation membrane shifts to the "STATE REQUIRING MAINTENANCE" can be predicted. In addition,, in the present embodiment, the operation amount is used, but it may also be possible to use the representative value of the operation amount.

**Fifth Embodiment**

In the first to fourth embodiments, the description has been given of the control of the system output using the gas-separation-system output control valve, and the monitoring of the operation amount thereof. By contrast, in the fifth embodiment, a description will be given of setting the monitoring target to the hydrogen concentration, while leaving the control side as is.

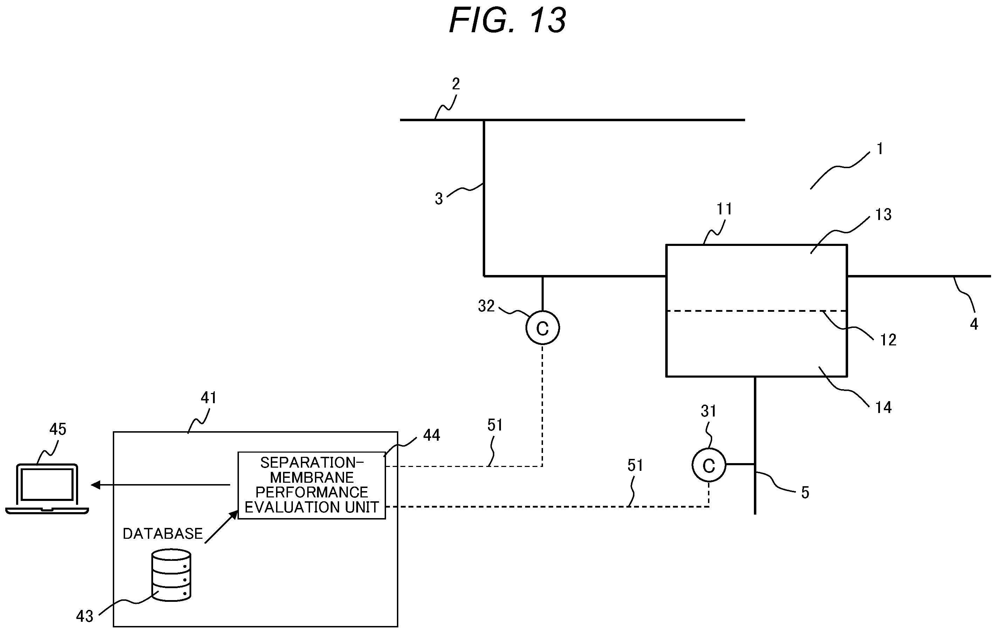

Fig. 13 is a diagram illustrating a schematic configuration example showing the gas separation system according to the fifth embodiment of the present invention. In the fifth embodiment, as shown in Fig. 13, the monitoring target is set to the hydrogen concentration, and the mixed gas hydrogen concentration is detected by using a mixed-gas hydrogen concentration sensor 32, while an extracted gas hydrogen concentration is detected by using an extracted-gas hydrogen concentration sensor 31. The separation-membrane performance evaluation unit 44 captures resultant hydrogen concentration signals, compares these signals to what is stored in the database 43, evaluates the performance of the separation membrane, and transmits a result of evaluating the performance of the separation membrane to the computer 45.

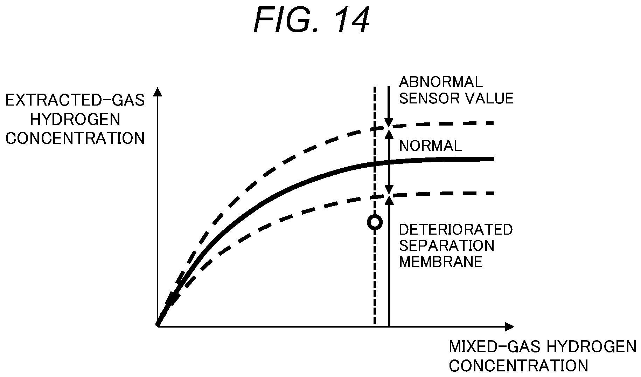

Fig. 14 illustrates characteristics showing a relationship between the mixed gas hydrogen concentration and the extracted gas hydrogen concentration, and the relationship which is proportional in a low-concentration area tends to be saturated as the concentration increases. With regard to this saturation characteristic, the solid line represents the characteristics of the mixed gas hydrogen concentration and the extracted gas hydrogen concentration that were acquired in an initial state, while the extracted gas hydrogen concentration based on the mixed gas hydrogen concentration as a reference fluctuates due to the deterioration of the gas separation system or an abnormality as a result of long-term operation.

Therefore, in the fifth embodiment, data on the solid indicating the initial state and a dotted line indicating a threshold for determining the performance deterioration of the separation membrane or an abnormality is stored in advance as what is stored in the database 43, and the relationship between the detected mixed gas hydrogen concentration and the detected extracted gas hydrogen concentration, which deviates above and below the dotted-line range in Fig. 13, is monitored. It is determined that a center value is abnormal when the relationship deviates above the range, and it is determined that the separation membrane has deteriorated when the relationship deviates below the range.

**Sixth Embodiment**

In the sixth embodiment, a description will be given of setting the monitoring target to the flow rate and pressure of the mixed gas, while leaving the control side as is.

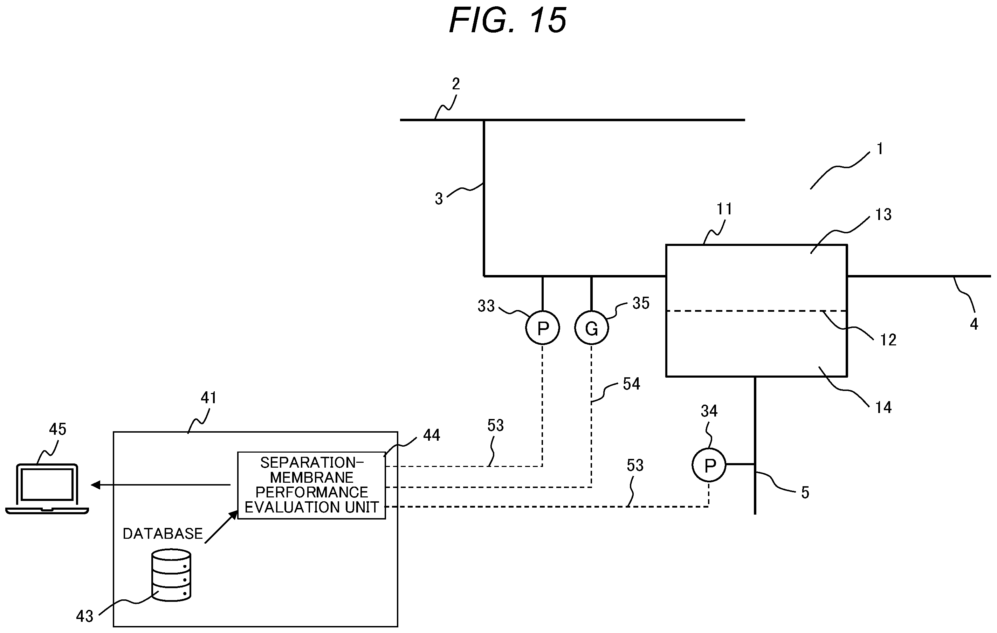

Fig. 15 is a diagram illustrating a schematic configuration example showing the gas separation system according to the sixth embodiment. In the sixth embodiment, the monitoring target is set to primary and secondary pressures and the mixed gas flow rate, and the primary and secondary pressures are detected by using pressure meters 33 and 34, while the mixed gas flow rate is detected by using a flow meter 35, as shown in Fig. 15. The separation-membrane performance evaluation unit 44 captures resultant detection signals, compares the detection signals to what is stored in the database 43, evaluates the performance of the separation membrane, and transmits a result of evaluating the performance of the separation membrane to the computer 45.

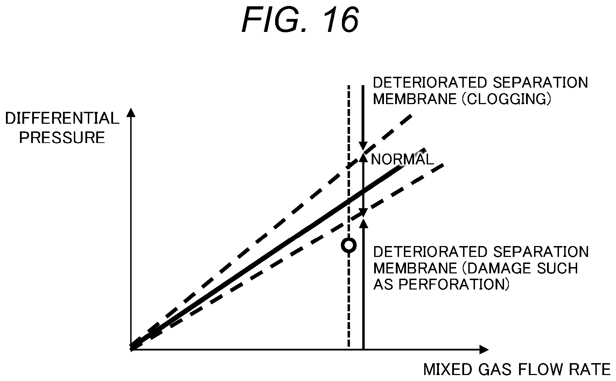

Fig. 16 illustrates characteristics representing a relationship between a primary-secondary pressure difference and the mixed gas flow rate, which basically have a proportional relationship therebetween. With regard to this proportional characteristic, the solid line indicates the characteristic representing the relationship between the primary-secondary pressure difference and the mixed gas flow rate, while the difference between the primary and secondar pressures based on the mixed gas flow rate as a reference fluctuates due to the deterioration of the gas separation system and an abnormality as a result of long-term operation.

Therefore, in the sixth embodiment, data on the solid line indicating the initial state and the dotted line indicating the threshold for determining the performance deterioration of the separation membrane or an abnormality is stored in advance as what is stored in the database 43, and the relationship between the detected primary-secondary pressure difference and the mixed gas flow rate, which deviates above or below the dotted-line range in Fig. 16, is monitored. It is determined that a center value is abnormal when the relationship deviates above the range, and it is determined that the separation membrane has deteriorated when the relationship deviates below the range.

**Seventh Embodiment**

The seventh embodiment is obtained by further adding the function of the representative value calculation unit 46 to the fifth embodiment. The representative value calculation unit 46 has basically the same function as that described using Fig. 5, and determines a time averaged value of measured values at given time intervals to acquire the characteristics of the mixed gas hydrogen concentration and the extracted gas hydrogen concentration.

**Eighth Embodiment**

While various descriptions have been given heretofore of the embodiments of the present invention, individual portions of such processing can further be modified as shown below to be implemented, which will be collectively described as the eighth embodiment.

In the foregoing embodiments, the description has been given of the case where the gas is extracted from the secondary side 14 of the separation membrane, but it may also be possible to extract the gas from the primary side 13 of the separation membrane. In this case, the hydrogen concentration in the non-permeate gas pipe 4 is measured, and the operation amount calculation unit 42 calculates the operation amount such that the concentration has a predetermined value.

In addition, while the deteriorated state of the separation membrane has been evaluated by using the operation amount such as the valve opening of the control valve that has been calculated by the operation amount calculation unit 42, the deteriorated state of the separation membrane may also be evaluated by using a measured value of a pressure, a flow rate, a hydrogen concentration, or the like. In a case of using the pressure and the flow rate, evaluation is performed by using a value obtained by dividing the pressure by the flow rate, and standardizing the resultant quotient. Meanwhile, in a case of using the hydrogen concentration, correction is performed with the hydrogen concentration in a gas supplied to the separation membrane.

Moreover, while the description has been given of the case where the one separation membrane is provided, it may also be possible to connect the separation membranes in parallel or in series.

Furthermore, the mixed-gas flow control valve 21, the non-permeate-gas pressure control valve 22, the permeate-gas pressure control valve 23, and the branched-gas flow control valve 24 need only to be devices that control flow rates and pressures, and it may also be possible to control a discharge pressure of a compressor on the basis of a pressure distribution and evaluate the deteriorated state of the separation membrane by using the discharge pressure of the compressor as the operation amount.

Moreover, the mixed gas pipe 3, the non-permeate gas pipe 4, the permeate gas pipe 5, the branched gas pipe 6, and the separation membrane module 11 may also have a heater, a cooler, and the like for temperature control of a fluid in the system.

**Reference Signs List**

| | |
|---|---|
| 1 | Gas separation system |
| 2 | Mixed gas main pipe |
| 3 | Mixed gas pipe |
| 4 | Non-permeate gas pipe |
| 5 | Permeate gas pipe |

6          Branched gas pipe
11         Separation membrane module
12         Separation membrane
13         Primary side
14         Secondary side
21         Mixed-gas flow control valve
22         Non-permeate-gas pressure control valve
23         Permeate-gas pressure control valve
24         Branched-gas flow control valve
31         Extracted-gas hydrogen concentration meter
32         Mixed gas hydrogen concentration meter
33         Primary-side gas pressure meter
34         Secondary-side gas pressure meter
35         Mixed gas flow meter
41         Control device
42         Operation amount calculation unit
43         Database
44, 48     Separation-membrane performance evaluation unit
45, 47     Computer (user-interface-mounted device)
46         Representative value calculation unit
51         Hydrogen concentration signal cable
52         Flow-control-valve control signal cable

**Claims**

1.  A deterioration checking device for a gas separation system that includes one or more gas separation membranes for selectively permeating a specific gas, and controls an output of each of the gas separation membranes by using an output control valve, the deterioration checking device comprising:

    an input unit that captures a processing amount that is affected by deterioration of the gas separation membrane;
    a database that stores the processing amount when the gas separation system is operated using the gas separation membrane in a brand-new state (before the deterioration); and
    a separation-membrane performance evaluation unit that evaluates performance of the gas separation membrane on the basis of a difference between a processing amount at the current time of the capturing and a processing amount in the brand-new state.

2.  The deterioration checking device for the gas separation system according to claim 1, wherein
    the processing amount that is affected by the deterioration of the gas separation membrane is an operation amount of the output control valve.

3.  The deterioration checking device for the gas separation system according to claim 2, wherein
    the database includes an initial value of the processing amount and a threshold for the difference between the processing amounts, and the separation-membrane performance evaluation unit determines the deterioration of the gas separation membrane and occurrence of an abnormality.

4.  The deterioration checking device for the gas separation system according to claim 1, wherein
    the output control valve that controls the output of the gas separation membrane is a non-permeate-gas pressure control valve that controls a non-permeate gas pressure of the gas separation membrane or a branched-gas flow control valve that branches the specific gas onto the secondary side of the gas separation membrane.

5.  The deterioration checking device for the gas separation system according to claim 1, wherein
    the separation-membrane performance evaluation unit evaluates the performance of the gas separation membrane by using a representative value of the processing amounts at the current time after the capturing of the processing amounts for a given period of time.

6.  The deterioration checking device for the gas separation system according to claim 1, wherein
    the separation-membrane performance evaluation unit indexes a state of the deterioration and outputs the indexed state of the deterioration to an external device.

7. The deterioration checking device for the gas separation system according to claim 1, wherein the processing amount that is affected by the deterioration of the gas separation membrane is a mixed-gas hydrogen concentration on the primary side of the gas separation membrane and an extracted-gas hydrogen concentration on the secondary side thereof.

8. The deterioration checking device for the gas separation system according to claim 7, wherein the database includes an initial value of a relationship of the extracted-gas hydrogen concentration on the secondary side of the gas separation membrane to the mixed-gas hydrogen concentration on the primary side thereof and a threshold for a difference between the mixed-gas hydrogen concentration and the extracted-gas hydrogen concentration, and the separation-membrane performance evaluation unit determines the deterioration of the gas separation membrane and occurrence of an abnormality.

9. The deterioration checking device for the gas separation system according to claim 1, wherein the processing amount that is affected by the deterioration of the gas separation membrane is a pressure difference between the primary side and the secondary side of the gas separation membrane and a mixed gas flow rate on the primary side.

10. The deterioration checking device for the gas separation system according to claim 7, wherein the database includes an initial value of a relationship of a pressure difference between the primary side and the secondary side of the gas separation membrane to a mixed gas flow rate on the primary side thereof and a threshold for the pressure difference between the primary side and the secondary side, and the separation-membrane performance evaluation unit determines the deterioration of the gas separation membrane and occurrence of an abnormality.

11. The deterioration checking device for the gas separation system according to claim 1, wherein the output control valve controls a gas hydrogen concentration in the gas separation system.

*FIG. 1*

EP 4 775 298 A1

# FIG. 2

| CONTROL DEVICE 41 | | | COMPUTER 45 |
|---|---|---|---|
| OPERATION AMOUNT CALCULATION UNIT 42 | DATABASE 43 | SEPARATION-MEMBRANE PERFORMANCE EVALUATION UNIT 44 | |

· INITIAL VALUE OF OPERATION AMOUNT V0
· LOWER LIMIT VALUE OF DIFFERENCE $\Delta$VL
· UPPER LIMIT VALUE OF DIFFERENCE $\Delta$VH

OPERATION AMOUNT V(t) →

PERFORMANCE EVALUATION OF SEPARATION MEMBRANE

↓

· SIGNAL NOTIFYING THAT SEPARATION MEMBRANE HAS DETERIORATED
· SIGNAL NOTIFYING THAT ABNORMALITY HAS OCCURRED

→ NOTIFY ADMINISTRATOR

# FIG. 3

START

S1
CALCULATE DIFFERENCE FROM
INITIAL VALUE OF OPERATION AMOUNT
$\Delta V = V(t) - V0$

S2
COMPARE $\Delta V$ TO
LOWER LIMIT VALUE $\Delta VL$
$\Delta V < \Delta VL$ ?

YES

S3
NOTIFY THAT
SEPARATION MEMBRANE
HAS DETERIORATED

NO

S4
COMPARE $\Delta V$ TO
UPPER LIMIT VALUE $\Delta VH$
$\Delta V > \Delta VH$ ?

YES

S5
NOTIFY THAT
ABNORMALITY
HAS OCCURRED

NO

*FIG. 4*

FIG. 5

# FIG. 6

| CONTROL DEVICE 41 | | | | COMPUTER 45 |
|---|---|---|---|---|
| OPERATION AMOUNT CALCULATION UNIT 42 | DATABASE 43 | REPRESENTATIVE VALUE CALCULATION UNIT 46 | SEPARATION-MEMBRANE PERFORMANCE EVALUATION UNIT 44 | |

REPRESENTATIVE VALUES OF OPERATION AMOUNT
- INITIAL VALUE OF OPERATION AMOUNT VT0
- LOWER LIMIT VALUE OF DIFFERENCE $\Delta$VTL
- UPPER LIMIT VALUE OF DIFFERENCE $\Delta$VTH

OPERATION AMOUNT V(t) → OPERATION AMOUNT V(t1 to t2) → CALCULATE REPRESENTATIVE VALUE VT → PERFORMANCE EVALUATION OF SEPARATION MEMBRANE

- SIGNAL NOTIFYING THAT SEPARATION MEMBRANE HAS DETERIORATED
- SIGNAL NOTIFYING THAT ABNORMALITY HAS OCCURRED

→ NOTIFY ADMINISTRATOR

EP 4 775 298 A1

## FIG. 7

## FIG. 8

*FIG. 9*

## FIG. 10

CONTROL DEVICE 41

| OPERATION AMOUNT CALCULATION UNIT 42 | DATABASE 43 | SEPARATION-MEMBRANE PERFORMANCE EVALUATION UNIT 48 | COMPUTER 47 |

- INITIAL VALUE OF OPERATION AMOUNT V0
- LOWER LIMIT VALUE OF DIFFERENCE ΔVL
- UPPER LIMIT VALUE OF DIFFERENCE ΔVH

OPERATION AMOUNT V(t)

CALCULATE INDEX VALUE OF DETERIORATED STATE OF SEPARATION MEMBRANE

D(t) → DISPLAY INDEX VALUE ON SCREEN

EP 4 775 298 A1

## FIG. 11

DETERIORATED STATE OF
SEPARATION MEMBRANE

CURRENT
STATE

INITIAL
STATE

STATE
REQUIRING
MAINTENANCE

## FIG. 12

DETERIORATED STATE OF
SEPARATION MEMBRANE

STATE
REQUIRING
MAINTENANCE

INITIAL
STATE

CURRENT
STATE

TIME

FIG. 13

# FIG. 14

EP 4 775 298 A1

## FIG. 15

## FIG. 16

DIFFERENTIAL PRESSURE

DETERIORATED SEPARATION MEMBRANE (CLOGGING)

NORMAL

DETERIORATED SEPARATION MEMBRANE (DAMAGE SUCH AS PERFORATION)

MIXED GAS FLOW RATE

EP 4 775 298 A1

# FIG. 17

## INTERNATIONAL SEARCH REPORT

| International application No. |
| --- |
| **PCT/JP2024/022410** |

| | |
| --- | --- |
| **A.** | **CLASSIFICATION OF SUBJECT MATTER** |

*B01D 65/00*(2006.01)i; *B01D 53/22*(2006.01)i; *G05B 23/02*(2006.01)i
FI:  B01D65/00; B01D53/22; G05B23/02 R

According to International Patent Classification (IPC) or to both national classification and IPC

| | |
| --- | --- |
| **B.** | **FIELDS SEARCHED** |

Minimum documentation searched (classification system followed by classification symbols)

B01D61/00-71/82, B01D53/22, C02F1/44, G05B23/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 2000-84344 A (TOKICO LTD.) 28 March 2000 (2000-03-28)<br>claims 1-2, paragraphs [0013]-[0047], fig. 1-10 | 1-11 |
| X | JP 2003-165705 A (NISSAN MOTOR CO., LTD.) 10 June 2003 (2003-06-10)<br>claim 1, paragraphs [0021]-[0069], fig. 1-6 | 1-11 |
| A | JP 2022-127393 A (HONDA MOTOR CO., LTD.) 31 August 2022 (2022-08-31) | 1-11 |
| A | JP 8-126882 A (KABUSHIKI KAISHA TOSHIBA) 21 May 1996 (1996-05-21) | 1-11 |
| A | US 2021/0308621 A1 (SCHLUMBERGER TECHNOLOGY CORPORATION) 07 October 2021 (2021-10-07) | 1-11 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 September 2024** | **17 September 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/022410**

| Patent document cited in search report | | | Publication date (day/month/year) | Patent family member(s) | | | Publication date (day/month/year) |
|---|---|---|---|---|---|---|---|
| JP | 2000-84344 | A | 28 March 2000 | (Family: none) | | | |
| JP | 2003-165705 | A | 10 June 2003 | (Family: none) | | | |
| JP | 2022-127393 | A | 31 August 2022 | (Family: none) | | | |
| JP | 8-126882 | A | 21 May 1996 | (Family: none) | | | |
| US | 2021/0308621 | A1 | 07 October 2021 | AU | 2019309528 | A1 | |
| | | | | BR | 112021001557 | A2 | |
| | | | | EA | 202190143 | A1 | |
| | | | | WO | 2020/023956 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022127393 A